# EUROPEAN PATENT APPLICATION

(11) **EP 4 600 892 A1**
(43) Date of publication of application: **13.08.2025**
(21) Application number: 23874837.0
(22) Date of filing: 02.10.2023
(51) Int. Cl.: G06Q 50/10, E03D 11/00

(54) **TOILET MANAGEMENT DEVICE AND COMPUTER PROGRAM**

(30) Priority: 05.10.2022 JP 2022160669
(71) Applicant: Kyoritsu Seiyaku Corporation, Tokyo 102-0074 (JP)
(72) Inventor: NAKANO, Yoichi, Tokyo 102-0074 (JP); SATO, Keita, Tokyo 102-0074 (JP)
(74) Representative: Hoffmann Eitle
(86) International application number: PCT/JP2023/035980
(87) International publication number: WO 2024/075710

(57) **Abstract**

A restroom management device 1 configured to recommend a restroom stall that can be more comfortably used by a user includes a restroom stall usage frequency determination unit 110 and an amenity usage status determination unit 120, and thus decides a recommended restroom stall 21X in consideration of not only usage frequencies of restroom stalls but also usage statuses of amenities therein. Even a restroom stall with a low usage frequency that is kept cleaner may not be selected as the recommended restroom stall 21X if the availability of its amenity is low. Therefore, the user can use a restroom stall that is kept cleaner because of a low usage frequency and in addition, offers higher availability of its amenity.

## Description

### Technical Field

The present invention relates to a restroom management device having a function of recommending a restroom stall to a user, and a computer program.

### Background Art

Patent Document 1 proposes a system that estimates the number of times toilet bowls are used, by using detection signals from sensors to detect the flow of wash water of the toilet bowls, sensors to detect the flow rates, sensors to detect the opening/closing of doors of restroom stalls, sensors to detect the remaining quantities in chemical solution supply devices, and so on, and prompts a user to use a restroom stall with a low usage frequency, thereby leveling the usage frequencies of the toilet bowls.

### Prior Art Document

### Patent Document

Patent Document 1: Japanese Laid-open Patent Publication No. 2018-62776
Patent Document 2: Japanese Laid-open Patent Publication No. 2011-152928
Patent Document 3: Japanese Laid-open Patent Publication No. 2018-87466
Patent Document 4: Japanese Laid-open Patent Publication No. 2021-20195
Patent Document 5: Japanese Laid-open Patent Publication No. 2018-43850
Patent Document 6: Japanese Patent No. 3923068
Patent Document 7: Japanese Patent No. 5713353
Patent Document 8: Japanese Laid-open Patent Publication No. 2014-25320
Patent Document 9: Publication of WO2022/113744A1
Patent Document 10: Japanese Laid-open Patent Publication No. 2015-151240

### Summary of the Invention

### Problems to Be Solved by the Invention

According to the art of Patent Document 1, since a restroom stall with a low usage frequency is presented to a user, the user can use a less dirty toilet bowl. Further, the leveling of the usage frequencies leads to the leveling of dirtiness degrees to facilitate cleaning work and also makes it possible to easily align the timing of the maintenance such as replenishing chemical solution supply devices with a chemical solution. As a result, a restroom manager can easily manage the restroom stalls.

However, in Patent Document 1, a specific restroom stall is recommended to a user based only on the usage frequencies of the restroom stalls. On the other hand, as described in Patent Documents 2 to 9, restroom stalls are each equipped with various kinds of amenities for comfortable restroom use, such as a chemical solution supply device to supply a chemical solution to a toilet bowel, a disposal bin specially for the disposal of used sanitary goods and the like, and a dispenser of disinfectant with which a user wipes and disinfect a toilet bowl and so on before sitting. Even in the case where the usage frequency of a toilet bowl in a restroom stall that a user is going to use is low, if, for example, the disinfectant is not discharged when the user tries to clean the toilet bowl after entering the restroom stall, the user is forced to select whether to leave the toilet stall without using it and enter an adjacent toilet stall or to give up the cleaning work with the disinfectant and use this restroom stall. Further, if the specialized disposal bin has already been full when a used sanitary good or the like is to be discarded, it is very inconvenient.

Patent Document 10 describes a wrapping function-equipped disposal bin that counts the number of wastes put therein based on a detection signal of an optical sensor provided near its inlet, to calculate the remaining number of wrapping films, or determines that a foreign object is put therein based on a signal of a weight sensor that measures the weight of the waste put therein. However, even though this art makes it possible to appropriately set when to perform consumable replenishment and when to perform maintenance, by detecting the remaining number and detecting that a foreign object is put, and transmitting information on these to a manager terminal, it does not disclose that a user is notified of the information on these.

The present invention was made in consideration of the above and has an object to provide a restroom management device capable of recommending a restroom stall that can be more comfortably used by a user, taking into consideration not only the usage frequencies of restroom stalls but also the usage statuses of their amenities, and a computer program.

### Means for Solving the Problems

To solve the aforesaid problem, a restroom management device of the present invention includes:
a restroom stall usage frequency determination unit configured to determine usage frequencies of restroom stalls provided in a public restroom;
an amenity usage status determination unit configured to determine a usage status of one amenity or more provided in each of the restroom stalls;
a recommended restroom stall extraction unit configured to extract a restroom stall whose use is to be recommended, out of the restroom stalls; and
a notification unit configured to notify a user of the recommended restroom stall extracted by the recommended restroom stall extraction unit,
wherein the recommended restroom stall extraction unit includes:
   a first extraction unit configured to extract one recommendation-candidate restroom stall or more based on the usage frequencies determined by the restroom stall usage frequency determination unit;
   a second extraction unit configured to extract, as a recommendation candidate, one restroom stall or more in which a usable quantity in at least one amenity out of the one amenity or more is determined to be equal to a predetermined threshold value or more by the amenity usage status determination unit; and
   a decision unit configured to decide the recommended restroom stall that the user is to be notified of, out of the recommendation-candidate restroom stalls extracted by the first extraction unit and the second extraction unit.

Preferably, the second extraction unit extracts, as the recommendation candidate, a restroom stall in which a usable quantity in a priority amenity the determination on whose usable quantity is considered important, out of the one amenity or more, is determined to be equal to a predetermined threshold value or more by the amenity usage status determination unit.

Also preferably, the second extraction unit extracts, as the recommendation candidate, a restroom stall in which a usable quantity in every one of the one amenity or more is determined to be equal to a predetermined threshold value or more by the amenity usage status determination unit.

Preferably, the predetermined threshold value used in the amenity usage status determination unit is set based on a maximum usable quantity in each of the amenities, a maintenance cycle of each of the amenities, and the usage frequency of each of the restroom stalls which frequency is obtained from the restroom stall usage frequency determination unit.

Preferably, the first extraction unit extracts the recommendation candidate in ascending order of the usage frequencies determined by the restroom stall usage frequency determination unit.

Preferably, the decision unit decides, as the recommended restroom stall, a restroom stall extracted by both the first and second extraction units, out of the recommendation-candidate restroom stall extracted by the first extraction unit and the recommendation-candidate restroom stall extracted by the second extraction unit.

Preferably, the decision unit
performs weighing regarding the recommendation-candidate restroom stall extracted by the first extraction unit, with a larger weight being assigned as the usage frequency is lower,
performs weighing regarding the recommendation-candidate restroom stall extracted by the second extraction unit, with a larger weight being assigned as the number of usable amenities is larger, and
decides the recommended restroom stall in descending order of a total weight of the two weights.

Preferably, the notification unit notifies one or more of the recommended restroom stalls extracted by the recommended restroom stall extraction unit.

More preferably, the notification unit notifies, together with the recommended restroom stall:
the usage frequency, of the recommended restroom stall, determined by the restroom stall usage frequency determination unit; and
details of the amenity usable in the recommended restroom stall which details are determined by the amenity usage status determination unit.

Preferably, the restroom management device further includes
a dirtiness status determination unit configured to determine dirtiness statuses of the restroom stalls, and
the recommended restroom stall extraction unit includes a third extraction unit configured to extract, as a recommendation candidate, a restroom stall whose dirtiness status is determined to be equal to a predetermined threshold value or less by the dirtiness status determination unit.

Preferably, the decision unit decides, as the recommended restroom stall, a restroom stall extracted by all the first to third extraction units, out of the recommendation candidate extracted by the first extraction unit, the recommendation-candidate restroom stall extracted by the second extraction unit, and the recommendation-candidate restroom stall extracted by the third extraction unit.

Also preferably, the decision unit
performs weighing regarding the recommendation-candidate restroom stall extracted by the first extraction unit, with a larger weight being assigned as the usage frequency is lower,
performs weighing regarding the recommendation-candidate restroom stall extracted by the second extraction unit, with a larger weight being assigned as the number of usable amenities is larger,
performs weighing regarding the recommendation-candidate restroom stall extracted by the third extraction unit, with a larger weight being assigned as the dirtiness status is lower, and
decides the recommended restroom stall in descending order of a total weight of the three weights.

Preferably, the notification unit notifies, together with the recommended restroom stall:
the usage frequency, of the recommended restroom stall, determined by the restroom stall usage frequency determination unit;
details of the amenity usable in the recommended restroom stall which details are determined by the amenity usage status determination unit; and
the dirtiness status, of the recommended restroom stall, determined by the dirtiness status determination unit.

Preferably, the restroom management device further includes
a vacancy status determination unit configured to determine vacancy statuses of the restroom stalls by determining entrance and exit statuses based on signals from sensors that detect entrance to the restroom stalls, and
the recommended restroom stall extraction unit decides the recommended restroom stall out of restroom stalls that are determined to be "vacant" by the vacancy status determination unit.

Preferably, the restroom management device includes
a final selection result information analysis unit configured to obtain information on a restroom stall selected by the user which information is obtained from the vacancy status determination unit, compare the information with a recommendation result of the recommended restroom stall displayed immediately before the user enters the restroom stall, determine ground information based on which the user finally selects the restroom stall, and output the ground information as final selection result information.

In this case, preferably, the second extraction unit has a function of extracting, as the recommendation candidate, a restroom stall in which a usable quantity in a priority amenity the determination on whose usable quantity is considered important, out of the one amenity or more, is determined to be equal to a predetermined threshold value or more by the amenity usage status determination unit, and
the final selection result information analysis unit feeds back the final selection result information to the second extraction unit, and the second extraction unit identifies the priority amenity based on the final selection result information.

A computer program of the present invention is a computer program causing a computer to function as a restroom management device, the computer program causing the computer to execute:
a procedure for determining usage frequencies of restroom stalls provided in a public restroom;
a procedure for determining a usage status of one amenity or more provided in each of the restroom stalls;
a procedure for extracting a restroom stall whose use is to be recommended, out of the restroom stalls; and
a procedure for notifying a user of the extracted recommended restroom stall,
wherein, in the procedure for extracting the recommended restroom stall, the program causes the computer to execute:
   a procedure for extracting one recommendation-candidate restroom stall or more determined based on the usage frequencies;
   a procedure for extracting, as a recommendation candidate, one restroom stall or more in which a usable quantity in at least one amenity out of the one amenity or more is determined to be equal to a predetermined threshold value or more; and
   a procedure for deciding the recommended restroom stall that the user is to be notified of, out of the recommendation-candidate restroom stall extracted based on the usage frequencies and the recommendation-candidate restroom stall extracted based on the usable quantities in the amenities.

Preferably, the computer program further causes execution of a procedure for determining dirtiness statuses of the restroom stalls, and
in the procedure for extracting the recommended restroom stall, a procedure for extracting, as a recommendation candidate, a restroom stall whose dirtiness status is determined to be equal to a predetermined threshold value or less is caused to be executed.

### Effect of the Invention

According to the present invention, a recommended restroom stall is decided in consideration of the usage statuses of amenities in addition to the usage frequencies of restroom stalls. Therefore, even a restroom stall with a low usage frequency that is kept cleaner may not be selected as the recommended restroom stall if the availability of its amenity is low, and one whose usage frequency is low and in which the usage status of its amenity is equal to a predetermined threshold value or more is extracted. Therefore, a user can use a restroom stall that is kept cleaner because of a low usage frequency and in addition, offers higher availability of its amenity. Further, for a manager of a public restroom, it is possible to level the usage statuses of the restroom stalls, leading to the leveling of the dirtiness degrees of the restroom stalls to facilitate maintenance, and in addition, leading to the leveling of the amenity maintenance. These contribute to a reduction in the total maintenance cost.

### Brief Description of Drawings

[FIG. 1] FIG. 1 is a conceptual view illustrating the whole configuration of a system for managing restroom stalls by a restroom management device according to one embodiment of the present invention.
[FIG. 2] FIG. 2 is a conceptual view illustrating a public restroom to be managed by the restroom management device of the embodiment, and restroom stalls, amenities, sensors, and so on in the public restroom.
[FIG. 3] FIG. 3 is an explanatory diagram of the configuration of the restroom management device of the embodiment.
[FIG. 4] FIG. 4 is an explanatory diagram of the configuration of a recommended restroom stall extraction unit in the restroom management device.
[FIG. 5] FIG. 5 is a view illustrating examples of the amenities and the sensors installed in the restroom stall.
[FIG. 6] FIG. 6 is an explanatory diagram of how a predetermined threshold value is set in an amenity usage status determination unit in the restroom management device.
[FIG. 7] FIG. 7 is an explanatory diagram of processes for extracting and deciding a recommended restroom stall by the recommended restroom stall extraction unit in the restroom management device.
[FIGs. 8] FIG. 8(a) is a view illustrating an example of a display, which is a notification destination of a notification unit, and FIG. 8(b) is an enlarged view illustrating an example of the presentation on the display in the case where there are a plurality of recommended restroom stalls.
[FIG. 9] FIG. 9 is an explanatory diagram of a mode in which a final selection result information analysis unit is provided in the recommended restroom stall extraction unit.
[FIG. 10] FIG. 10 is an explanatory diagram of the configuration of a restroom management device according to another embodiment of the present invention.
[FIG. 11] FIG. 11 is an explanatory diagram of the configuration of a recommended restroom stall extraction unit in the restroom management device according to the other embodiment.

### Modes for Carrying out the Invention

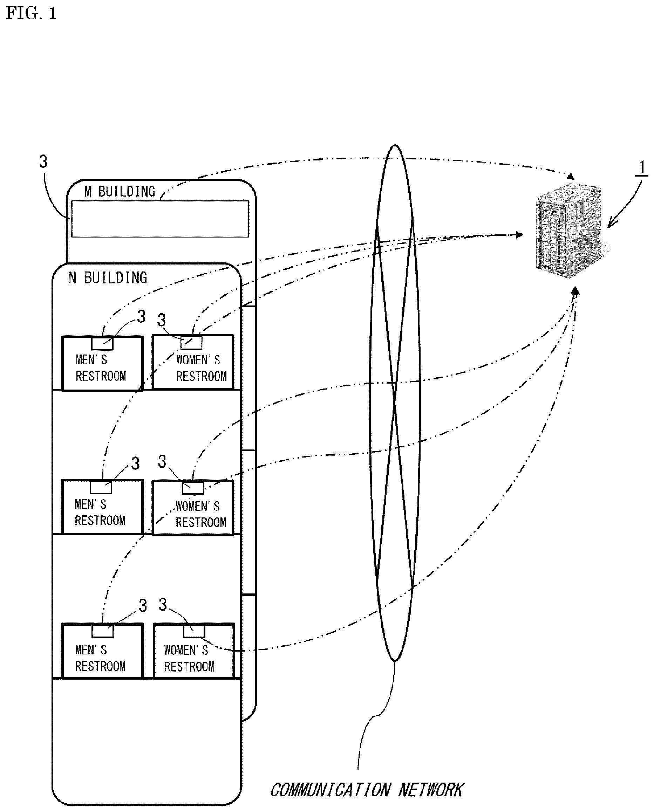

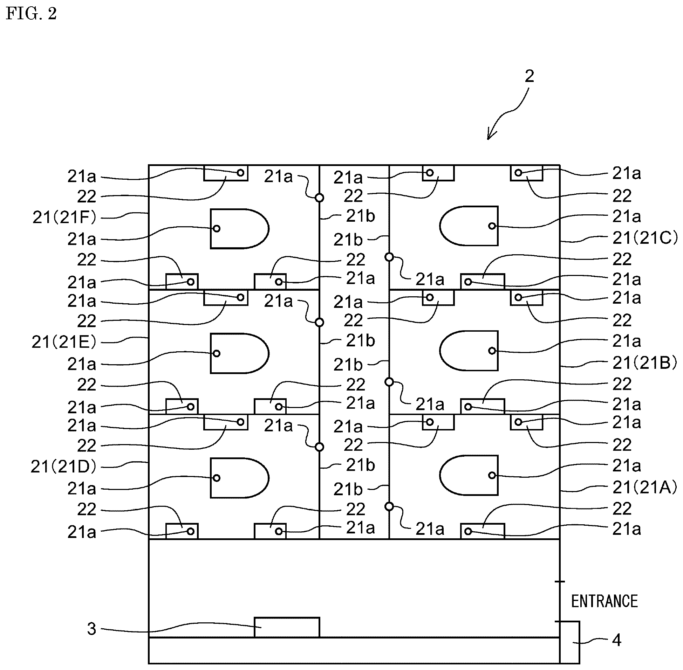

A more detailed description will be hereinafter given based on embodiments of the present invention illustrated in the drawings. FIG. 1 and FIG. 2 are views illustrating a schematic configuration when restroom stalls 21 of public restrooms 2 are managed using a restroom management device 1 of this embodiment. The public restrooms 2 are managed by the restroom management device 1 based on advance contracts or the like. As illustrated in these drawings, the restroom management device 1 of this embodiment is constituted by a computer and connected to public restroom 2-side terminal devices 3 through communication means such as the Internet. The restroom management device 1 may be constituted by a physical server or may be constituted by a cloud server in a cloud environment. The terminal devices 3 may be any as long as they are capable of communicating with the restroom management device 1 and also have a function of being capable of communicating with various sensors 21a provided in the restroom stalls 21 and include mobile terminals such as personal computers (PC), tablets, and smartphones, and relays such as gateways and routers. Further, the "public restrooms 2" include all the restrooms provided in public facilities such as government offices and community centers, commercial facilities such as department stores and supermarkets, hotels, office buildings, stations, parks, restaurants, convenience stores, and so on and used by many unspecified persons.

The number of the terminal devices 3 installed is not limited. The restroom stalls 21 may each have the terminal device 3, or in the case where the plurality of public restrooms 2 such as those for men and women are provided on the same floor in, for example, a department store, the public restrooms 2 may each have the terminal device 3 (the example of the N building in FIG. 1), or in the case where the terminal device 3 is capable of communicating with all the public restrooms 2 provided on the same floor, it may be provided on each floor or it may be provided in each building having the public restrooms 2 to be managed (the example of the M building in FIG. 1). The installation number can be appropriately set in consideration of the kind of the communication means, communication distance, the performance of the terminal device 3, and so on.

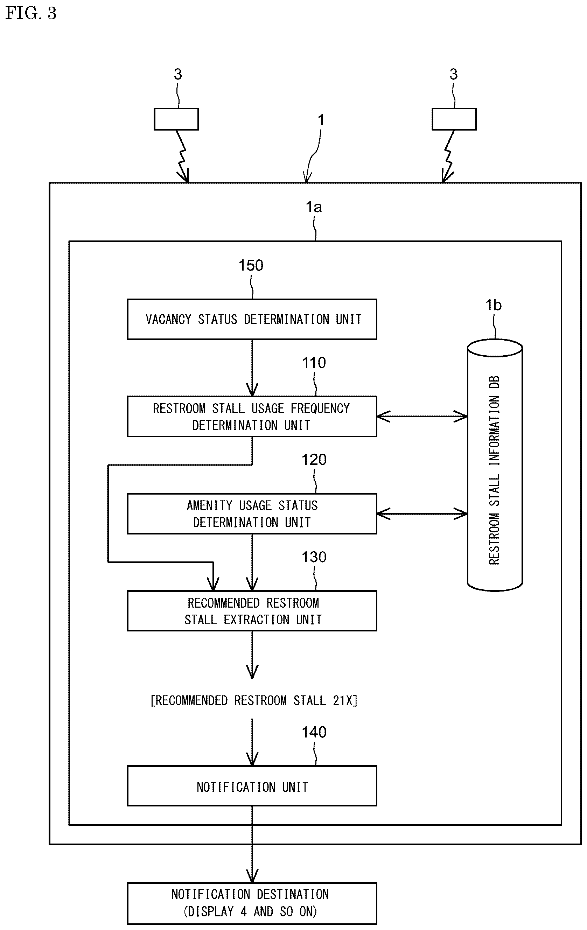

As illustrated in FIG. 3, the restroom management device 1 has a storage unit (including not only a recording medium such as a hard disk internally provided in the computer (restroom management device 1) but also various removable recording media and a recording medium of another computer connected through communication means) 1a storing a computer program causing the execution of a procedure functioning as a restroom stall usage frequency determination unit 110, a procedure functioning as an amenity usage status determination unit 120, a procedure functioning as a recommended restroom stall extraction unit 130, a procedure functioning as a notification unit 140, and so on. Further, the computer program of this embodiment also causes the execution of a procedure functioning as a vacancy status determination unit 150 that determines vacancy statuses of the restroom stalls 21. Further, regarding the restroom stalls 21 of the public restroom 2 to be managed, their positional information, information on the installation of amenities 22, and so on are registered in a restroom stall information database 1b.

Note that the computer program can be provided while stored in a recording medium. The recording medium storing the computer program may be a non-transitory recording medium. The non-transitory recording medium is not limited, and examples thereof include recording media such as a flexible disk, a hard disk, CD-ROM, MO (magneto-optical disk), DVD-ROM, and a memory card. Further, the computer program can be transferred to the computer through a communication line to be installed therein.

The restroom stall usage frequency determination unit 110 determines the usage frequencies of the restroom stalls 21 of the public restroom 2. As illustrated in FIG. 2, in the restroom stalls 21, the sensors 21a to detect that the restroom stalls 21 are used are provided. Signals of the sensors 21a are transmitted to the terminal device 3 through communication modules built in the sensors 21a or connected to the sensors 21a and are transmitted to the restroom management device 1 through the terminal device 3. In this embodiment, the restroom stall usage frequency determination unit 110 of the restroom management device 1 determines the usage frequencies based on data of the received signals. However, if the performance of the terminal device 3 allows, the terminal device 3 may analyze the signals of the sensors 21a to determine the usage frequencies and transmit only the analysis results to the restroom management device 1 side, and the restroom stall usage frequency determination unit 110 may receive the data.

The kind of the sensors 21a to detect that the restroom stalls 21 are used is not limited, and usable examples thereof include a sensor to detect the flow of water (wash water) in a toilet bowl in the restroom stall 21, a sensor attached to a pipe to detect a flow rate, a sensor to detect a locking/unlocking operation of a key of the restroom stall, a sensor to detect that a user has sat on the toilet bowl, a sensor installed for each toilet bowl to measure the number of times a chemical solution is supplied from a chemical solution supply device that supplies a predetermined amount of the chemical solution to the wash water so that they are mixed every time the wash water flows in the toilet bowl, a sensor to measure the remaining amount of the chemical solution in the chemical solution supply device, a sensor provided near each toilet bowl to detect the number of times a deodorizing device or an air freshening device that operates when a user approaches it is driven, a sensor to detect the opening/closing of an opening/closing lid of a disposal bin (container where to discard sanitary goods and the like) provided in the restroom stall 21, a sensor to detect that a user approaches the disposal bin, and in the case of a wrapping function-equipped disposal bin that individually wraps wastes such as sanitary goods for disposal, a sensor to detect the usage quantity or the remaining quantity of its wrapping films. It is possible to measure the usage frequency by counting the detection number based on the detection signals of these sensors 21a or finding the remaining quantity of the chemical solution or the wrapping films.

The amenity usage status determination unit 120 determines the usage status of one amenity 22 or more provided in each of the restroom stalls 21. The amenity 22 mentioned here refers to various things provided to make the environment in the restroom stall 21 comfortable. Examples thereof include a liquid dispenser that discharges a soap liquid, a disinfectant, or the like manually or automatically as is disclosed in Japanese Laid-open Patent Publication No. 2011-152928 (Patent Document 2), a device that sprays a disinfectant into the toilet bowl or the restroom stall 21 as is disclosed in Japanese Laid-open Patent Publication No. 2018-87466 (Patent Document 3), a device that sprays an air freshener, a deodorizer, or the like into the restroom stall 21 as is described in Japanese Laid-open Patent Publication No. 2021-20195 (Patent Document 4), a waste matter storage device whose lid member provided on its top part opens/closes and that is used for the disposal of waste matters such as used sanitary goods (used sanitary napkins, diapers, incontinence pads, and the like) as is disclosed in Japanese Laid-open Patent Publication No. 2018-43850 (Patent Document 5), a waste storage device that seals a waste such as a used sanitary good or the like by sandwiching it between two films and stores it in a container as is described in Japanese Patent No. 3923068 (Patent Document 6) and Japanese Patent No. 5713353 (Patent Document 7), a chemical-solution feeding device for a flush toilet bowl that feeds a predetermined amount of a chemical solution every time wash water flows in a flush toilet as is disclosed in Japanese Laid-open Patent Publication No. 2014-25320 (Patent Document 8), and a device that provides sanitary goods such as sanitary napkins and tampons as is disclosed in the publication of WO2022/113744A1 (Patent Document 9). Note that the device for providing sanitary goods is not limited to the above configuration and may be any structure as long as it is installed in the restroom stall 21 and capable of supplying sanitary goods in response to a user's request. Further, the sanitary goods to be provided are not limited to those mainly for women such as sanitary napkins, and a device that provides diapers, incontinence pads, or the like that are used by anyone irrespective of age and sex is also included.

Further, examples of commercial products include a chemical solution supply device called SANITIZER, a sanitary box where to discard used sanitary goods, a diaper collection container, and a toilet sheet cleaner that discharges a disinfectant for disinfecting a toilet bowl, which are manufactured by NIPPON CALMIC LTD.

The amenity usage status determination unit 120 receives, through the terminal devices 3, data obtained from the sensors 21a used in determining the usage frequencies based on the usage statuses of the amenities 22, for example, the sensors to detect the supply of the chemical solutions in the chemical solution supply devices, the sensors to detect the remaining amounts of the chemical solutions in the chemical solution supply devices, the sensors provided near the respective toilet bowls to detect the driving of the deodorizing devices or the air freshening devices which operate in response to the users' approach, the sensors to detect the opening/closing of the opening/closing lids of the disposal bins (containers where to discard sanitary goods and the like) provided in the restroom stalls 21, the sensors to detect that users approach the disposal bins, and the sensors to detect the used quantities or the remaining quantities of the wrapping films of the wrapping function-equipped disposal bins which individually wrap wastes such as sanitary goods for disposal, out of the aforesaid sensors 21a used in the determination by the aforesaid restroom stall usage frequency determination unit 110, and it determines their usage statuses.

For example, as is disclosed in Japanese Laid-open Patent Publication No. 2015-151240 (Patent Document 10), in the wrapping function-equipped disposal bin, it is possible to calculate the remaining number of the wrapping films by counting the number of wastes put therein based on a detection signal of an optical sensor provided near its inlet, and to determine that a foreign object is put therein based on a signal of a weight sensor that measures the weight of the waste put therein. Consequently, the amenity usage status determination unit 120 is capable of showing the remaining quantity of the wrapping films or showing an abnormal state such as a state in which a foreign object has been put therein.

As described above, amenity information such as the kinds and the installation number of the amenities 22 installed in each of the restroom stalls 21 is registered in the restroom stall information database 1b together with individual information on the public restroom 2 to be managed. Therefore, the amenity usage status determination unit 120 is capable of acquiring the amenity information such as the kinds and the installation number of the amenities 22 installed in each of the restroom stalls 21 by accessing the restroom stall information database 1b and reading the individual information.

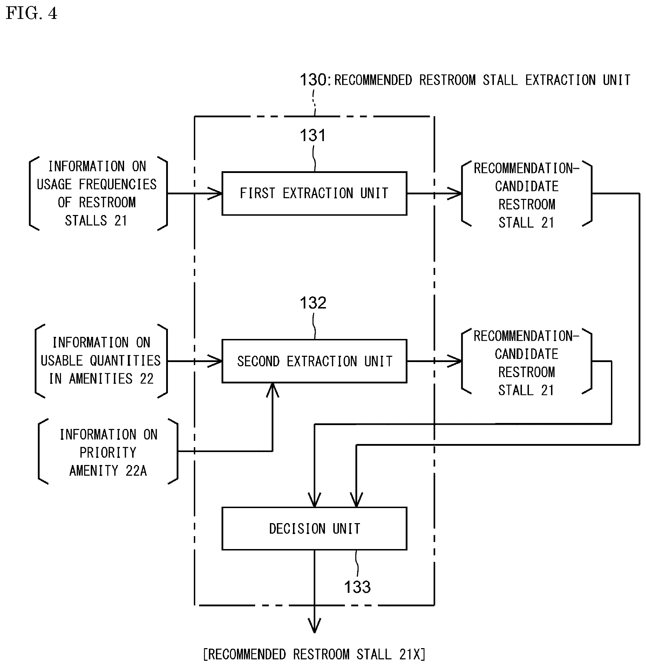

The recommended restroom stall extraction unit 130 extracts a restroom stall 21 whose use is to be recommended (recommended restroom stall 21X) out of the restroom stalls 21 of the management-target public restroom 2. Specifically, as illustrated in FIG. 4, the recommended restroom stall extraction unit 130 includes: a first extraction unit 131 and a second extraction unit 132 each having a function of extracting a recommendation candidate from the restroom stalls 21; and a decision unit 133 having a function of deciding the recommended restroom stall 21X. The first extraction unit 131 extracts one recommendation-candidate restroom stall 21 or more based on information on the usage frequencies determined by the restroom stall usage frequency determination unit 110. The second extraction unit 132 extracts, as a recommendation candidate, one restroom stall 21 or more in which a usable quantity in at least one amenity 22 out of the at least one amenity 22 is determined to be equal to a predetermined threshold value or more by the amenity usage status determination unit 120 based on information regarding the usable quantity in the at least one amenity 22. The decision unit 133 decides the recommended restroom stall 21X that the user is to be finally notified of, out of the one recommendation candidate or more extracted by the first extraction unit 131 and the one recommendation candidate or more extracted by the second extraction unit 132.

Preferably, the first extraction unit 131 is configured to extract the recommendation candidate in ascending order of the usage frequencies determined by the restroom stall usage frequency determination unit 110. Extracting the recommendation candidate in ascending order of the usage frequencies is preferable because a dirtiness degree is often lower as the usage frequency is lower, and this configuration achieves the leveling of the usage frequencies of the restroom stalls 21.

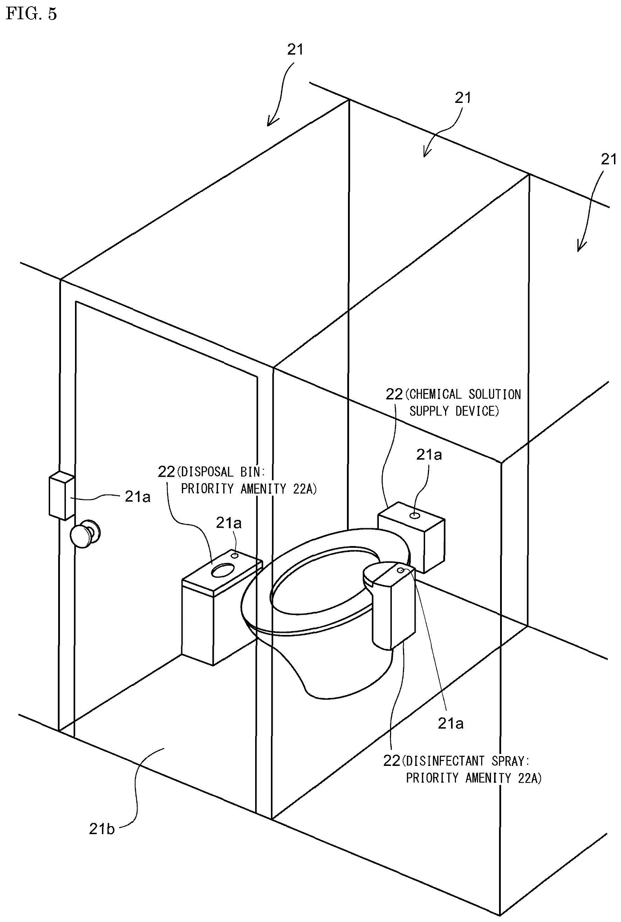

The second extraction unit 132 may be configured to extract those in each of which the usable quantity in at least one amenity 22 is determined to be equal to the predetermined threshold value or more, but this configuration may result in the extraction of a large number of the recommendation-candidate restroom stalls 21. In view of this, the second extraction unit is preferably configured to extract a restroom stall 21 in which the usable quantity in a priority amenity 22A the determination on whose usable quantity is considered important is determined to be equal to or more than the predetermined threshold value. In the case where the plurality of amenities 22 are installed in the restroom stall 21 as illustrated in, for example, FIG. 5, the disinfectant spray and the disposal bin, for instance, can be set as the priority amenities 22A in advance, or the priority amenity 22A can be appropriately set according to a request from a manager or the like of the public restroom 2. Further, the priority order can be of course appropriately changed according to, for example, the installation place of the public restroom 2. The priority amenity 22A is registered in the restroom stall information database 1b in linkage with the individual information of each of the restroom stalls 21. Therefore, the second extraction unit 132 identifies the priority amenity 22A in each of the restroom stalls 21, obtains information on this priority amenity 22A as the usable quantity determined by the amenity usage status determination unit 120, and extracts the recommendation candidate. Consequently, the recommendation candidates extracted by the second extraction unit 132 are more narrowed down than in the case where the priority amenity 22A is not identified.

Further, the second extraction unit 132 can also be configured to extract, as the recommendation candidate, a restroom stall 21 in which the usable quantity in every one of the one amenity 22 or more installed in the restroom stall 21 is determined to be equal to or more than the predetermined threshold value by the amenity usage status determination unit 120. In this case, it is also possible to narrow down the recommendation candidates as compared with the case where all the restroom stalls 21 in each of which the usable quantity in at least one amenity 22 of the restroom stall 21 is equal to or more than the predetermined threshold value are extracted. Note that at the time of the extraction, the second extraction unit 132 can also append, as reference information, specific states such as, for example, "large", "small", "number of uses available: ... times", and "remaining quantity ... pieces" regarding the usable quantity in each of the amenities 22 including not only at least one target amenity 22 whose usable quantity is determined to be equal to or more than the predetermined threshold value but also the amenity 22 whose usable quantity is not determined to be equal to or more than the predetermined threshold value.

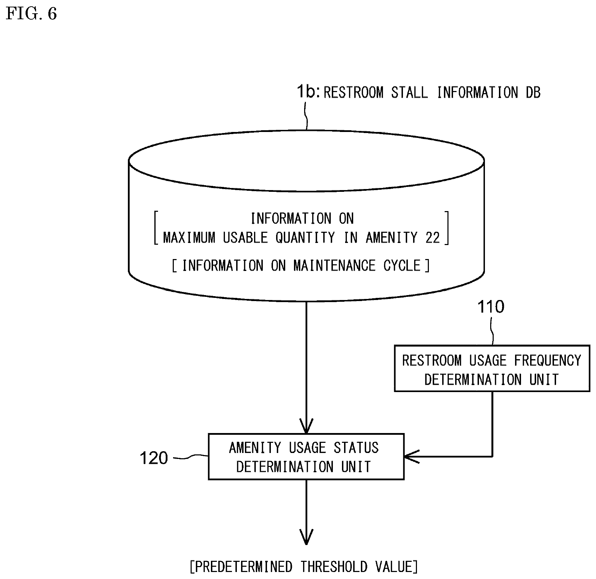

Here, the "predetermined threshold value" used in the amenity usage status determination unit 120 can be set as desired. For example, it may be set to a 1/3 value of the total amount in the case of the disinfectant spray, or to a 1/5 value of the total quantity of the wrapping films in the case of the disposal bin having the wrapping films for sealing wastes. It may be a value set for each of the amenities 22 in advance, or may be set to a certain value according to a request from the manager of the public restroom 2. Further, the cycle of maintenance work such as replenishing the amenities 22 with the liquid and changing the films differs depending on the kind of the amenity 22. Further, as for the maintenance cycle, the manager side of the public restroom 2 may perform the work such as replenishing or changing every day or every several days, or a provider side that provides the amenity 22 performs the work once a month to several months at the site. Therefore, preferably, as illustrated in FIG. 6, information on the maximum usable quantity and the maintenance cycle of each of the amenities 22 is read from the restroom stall information database 1b, the information on the usage frequency of the relevant restroom room 21 is obtained from the restroom stall usage frequency determination unit 110, a usable period of each of the amenities 22 is found using them, and the "predetermined threshold value" is set to a value such that the remaining quantity of the refilling- or changing-target liquid, film, or the like does not become zero during a period from the last maintenance work up to the next maintenance.

The decision unit 133 decides the recommended restroom stall 21X out of the recommendation candidates extracted by the two extraction units 131, 132 as described above, and its deciding method is not limited as long as it has this function.

For example, it can be configured to decide, as the recommended restroom stall 21X, a restroom stall 21 extracted by both the first extraction unit 131 and the second extraction unit 132 out of one recommendation-candidate restroom stall 21 or more extracted by the first extraction unit 131 and one recommendation-candidate restroom stall 21 or more extracted by the second extraction unit 132. For example, in the case where the first extraction unit 131 extracts two restroom stalls 21A, 21C illustrated in FIG. 2 because their usage frequencies are low, and the second extraction unit 132 extracts the restroom stalls 21C, 21D because the priority amenities 22A provided therein satisfy the predetermined threshold value or more or all of the amenities 22 therein satisfy the predetermined threshold value or more, the restroom stall 21C extracted by both is decided as the recommended restroom stall 21X.

Further, the decision unit 133 can also be configured to perform weighing regarding the recommendation-candidate restroom stall 21 extracted by the first extraction unit 131, with a higher weight being assigned as the usage frequency is lower, perform weighing regarding the recommendation-candidate restroom stall 21 extracted by the second extraction unit 132, with a higher weight being assigned as the number of usable amenities 22 is larger, and decide the recommended restroom stall 21X in descending order of the total weight of the two weights.

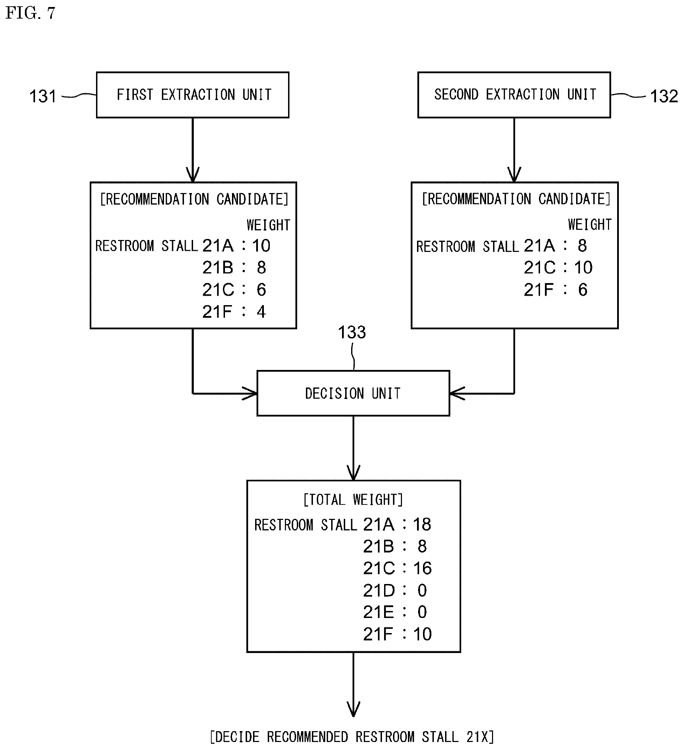

For example, let us assume that six restroom stalls 21A to 21F are installed in the management-target public restroom 2 as illustrated in FIG. 2. If the four restroom stalls 21A, 21B, 21C, 21F are extracted by the first extraction unit 131 in this case as illustrated in FIG. 7, the decision unit 133 assigns a larger weight as the usage frequency is lower. For example, if the usage frequency is lower in order of the restroom stalls 21A, 21B, 21C, 21F, it assigns weights 10, 8, 6, 4 to them respectively. Similarly, in the case where the second extraction unit 132 extracts the three restroom stalls 21A, 21C, 21F, the decision unit 133 assigns a larger weight as the number of the usable amenities 22 is larger. For example, if three amenities, the disinfectant spray, the disposal bin, and the chemical solution supply device, are determined to satisfy the predetermined threshold values or more in the restroom stall 21A, four amenities, the disinfectant spray, the disposal bin, the chemical solution supply device, and the deodorizing device, are determined to satisfy the predetermined threshold values or more in the restroom stall 21C, and two amenities, the disinfectant spray and the chemical solution supply device, are determined to satisfy the predetermined threshold values or more in the restroom stall 21F, the decision unit 133 assigns a weight of 8 to the restroom stall 21A, a weight of 10 to the restroom stall 21C, and a weight of 6 to the restroom stall 21F. Then, the total weights in which both the former and latter weights are taken into account are found.

For example, if the total weight of the two weights assigned to a restroom stall extracted by neither of these is set to 0, the total weights are as follows: the restroom stall 21A: 10 + 8 = 18, the restroom 21B: 8 + 0 = 8, the restroom stall 21C: 6 + 10 = 16, the restroom 21D: 0 + 0 = 0, the restroom stall 21E: 0 + 0 = 0, and the restroom stall 21F: 4 + 6 = 10. The restroom stalls 21D, 21E are extracted by neither of the first and second extraction units 131, 132, and this case includes not only a case where they are not extracted because their usage frequencies are high and the usable quantities in their amenities 22 are small but also a case where they are not extracted because they are determined to be "occupied" by the later-described vacancy status determination unit 150.

Therefore, in this case, the restroom stall 21A with the largest total weight is the recommended restroom stall 21X. It should be noted that the way the weight is assigned and the way the total weight is found are not limited to the above as a matter of course, but it is preferable to set them such that a restroom stall 21 with a lower usage frequency and with higher availability of the usable amenities 22 becomes the recommended restroom stall 21X. Further, the decision unit 133 may not only set one recommended restroom stall 21X but also set a plurality of recommended restroom stalls 21X. For example, the three restroom stalls 21A, 21C, 21F can also be decided as the recommended restroom stalls 21X in descending order of the aforesaid total weight. Further, in this case, after the total weights ("weight" is not limited to a numerical value but the way to indicate it includes, for example, "A" corresponding to the total weight of 15 or more and "B" corresponding to the total weight of 1 to 15) are set, the plurality of restroom stalls 21X can be recommended with these values of the total weights appended to them.

Further, the recommended restroom stall extraction unit 130 can append not only the total weight of the recommended restroom stall 21X but also the details of the amenity 22 usable in the recommended restroom stall 21X (the kind of the amenity 22, a usable quantity therein (the remaining quantity or the like of the disinfectant or the wrapping films) at the time of the recommendation.

The notification unit 140 notifies the one recommended restroom stall 21X or more extracted by the recommended restroom stall extraction unit 140. Specifically, it has a function of receiving information on the recommended restroom stall 21X from the recommended restroom stall extraction unit 130 to cause various displays or the like being notification destinations to display the information or to notify the information by sound. Examples of the notification destination include: specialized displays 4 (see FIG. 2) installed near entrances of public restrooms 2 in parking areas of highways or the like, department stores, office buildings, and so on or at entrances, busy places, or the like on floors of buildings where public restrooms 2 are installed; displays of mobile terminals such as smartphones of users using the public restroom 2; and if sound is used for the notification, speakers installed near the public restrooms 2, and speakers of smartphones of users.

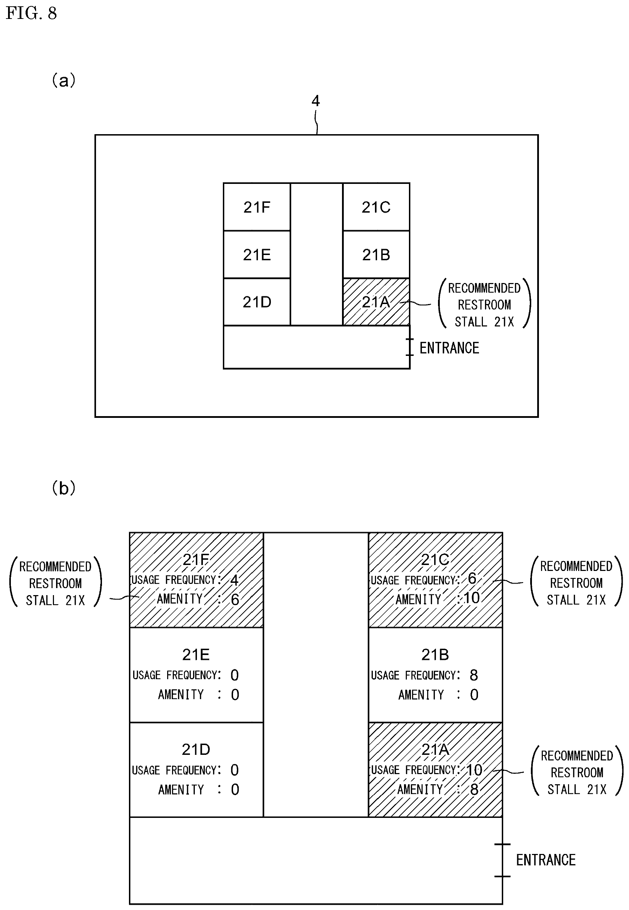

In the case where the notification destination is the display 4 installed at the entrance of the public restroom 2 as illustrated in FIG. 2, the notification unit 140 can be configured to have a function of causing the display 4 to show a map where the positions of the restroom stalls 21 of the public restroom 2 are indicated, and instructing it to clearly show the position of the recommended restroom stall 21X (for example, the restroom stall 21A) on the map by, for example, displaying only the recommended restroom stall 21X in a different color as illustrated in FIG. 8(a), for instance. Further, in the case where the recommended restroom stall extraction unit 130 recommends the plurality of recommended restroom stalls 21X, these restroom stalls (for example, the restroom stalls 21A, 21C, 21F) can be displayed in a different color for clear indication (see FIG. 8(b)). In this case, it is possible to distinguish the first candidate and the second candidate by displaying them in different colors, displaying their priority orders, or the like based on the recommendation order. Further, regarding, for example, the three restroom stalls 21A, 21C, 21F extracted as the recommended restroom stalls 21X, the evaluation results can be displayed together. For example, 10 as the weight of the usage frequency and 8 as the weight regarding the amenity 22 are appended to the display of the restroom stall 21A, 6 as the weight of the usage frequency and 10 as the weight regarding the amenity 22 are appended to the display of the restroom stall 21C, and 4 as the weight of the usage frequency and 8 as the weight regarding the amenity 22 are appended to the display of the restroom stall 21F, as illustrated in FIG. 8(b). Further, it is also possible to display information on the usage frequencies and the amenities 22 of the non-recommended restroom stalls 21B, 21D, 21B together to notify users of the information. Consequently, for example, even if, during a short period up to an instant when a user reaches the recommended restroom stall 21X from the entrance of the public restroom 2 after confirming the recommended restroom stall 21X by watching the display 4 installed at the entrance of the public restroom 2, a state change (for example, sudden entrance of a third person to the recommended restroom stall 21X during this period) occurs, the user can select a restroom stall 21 based on an item the user considers more important (for example, the usage frequency). Further, in the case where the recommended restroom stall extraction unit 130 appends the details of the amenity 22 usable in the recommended restroom stall 21X (the kind of the amenity 22, the usable quantity (the remaining quantity of the disinfectant, the wrapping films, or the like) to the recommendation as described above, the specific contents (the number of uses available and the like) of the information can also be displayed.

If the detailed evaluation results are thus displayed, a user of the public restroom 2 may compare, for example, the restroom stall 21A and the restroom stall 21C and select the restroom stall 21C in which the availability of the amenities 22 is higher even if the total weight of the restroom stall 21A is higher, and this configuration can better meet the needs of the user. Further, by displaying the recommended restroom stall 21X on the map showing the positions of the restroom stalls 21 of the public restroom 2, it is possible for some user to select a closer one in the public restroom 2, and above all, to select one in which the availability of a certain amenity 22 that meets the need of the user is higher.

As described above, in the case where the decision unit 133 decides the plurality of recommended restroom stalls 21X and in the case where the recommended restroom stall extraction unit 130 is configured to append not only the evaluation results (weights) of the recommended restroom stalls 21X but also the details of the amenities 22 usable in the recommended restroom stalls 21X (the kinds of the amenities 22, the usable quantities (the remaining quantities of the disinfectant, the wrapping films, and so on) to the recommendation, a user who actually uses a restroom stall may select, for example, the restroom stall 21C in which the availability of the amenity 22 is higher even if the total weight of the restroom stall 21A is high in the example in FIG. 8(b). Further, in the case where the restroom stall 21C becomes occupied, the user may compare the restroom stall 21A and the restroom stall 21F to select the restroom stall 21F instead of the restroom stall 21A in which the remaining quantity in the amenity 22 being a target in the predetermined threshold value-based determination by the second extraction unit 132 is relatively large if the aforesaid reference information appended by the second extraction unit 132 shows that, for example, the remaining quantity in a sanitary good providing device that is not a determination target is larger in the restroom stall 21F than in the restroom stall 21A.

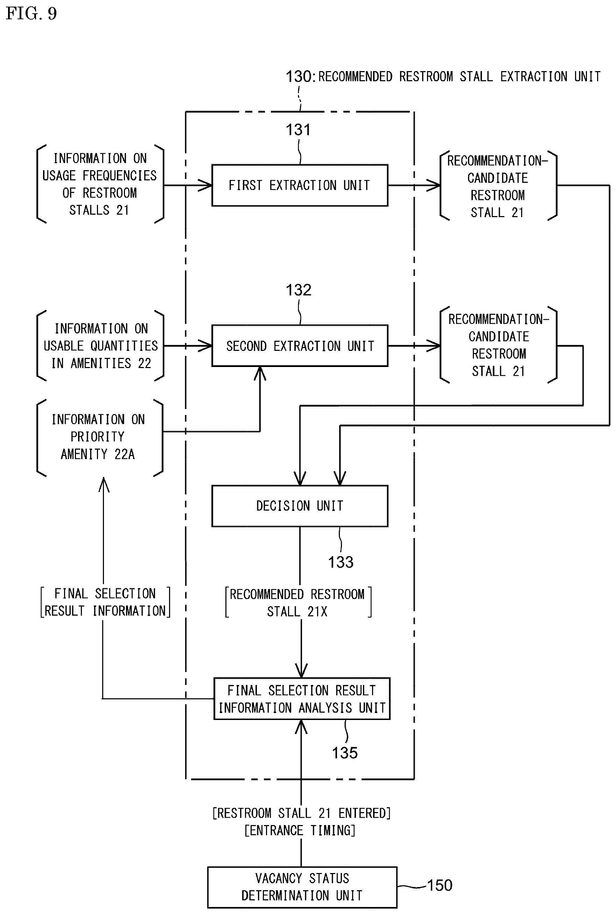

Therefore, such a user's final selection result is preferably used as a determination material when the recommended restroom stall extraction unit 130 decides the recommended restroom stall. For example, in the case where the second extraction unit 132 sets the aforesaid priority amenity 22A, an adoptable configuration instead of the configuration of setting the priority amenity in advance is that, as illustrated in FIG. 9, a final selection result information analysis unit 135 that statistically processes the users' final selection results or is made to learn them by machine learning is provided, the final selection result information analysis unit 135 feeds back the final selection result information to the second extraction unit 132, and the second extraction unit 132 identifies the priority amenity 22A based on the final selection result information and extracts a restroom stall 21 in which the usable quantity in the priority amenity 22A is determined to be equal to or more than the predetermined threshold value. For example, in the case where the final selection result information analysis unit 135 determines based on the users' final selection results that a restroom stall 21 in which the usable quantity in the sanitary good waste storage device or the sanitary good providing device is large tends to be selected, the waste storage device or the sanitary good providing device is set as the priority amenity 22A used in the second extraction unit 132. Since the setting of the priority amenity 22A is automatically fed back through statistical processing or machine learning based on the users' final selection result information, it is possible to make the kind of the priority amenity 22A adapted to users' actual usage statuses that depend on the installation position of the restroom, season, climate, and so on.

The aforesaid recommended restroom stall 21X is selected from restroom stalls 21 that are vacant at an instant when the user is going to use it, out of the restroom stalls 21 of the public restroom 2. Therefore, in this embodiment, the vacancy status determination unit 150 that determines vacancy statuses of the restroom stalls 21 is provided (see FIG. 3). The vacancy status determination unit 150 receives the detection signals of the various sensors 21a used in the aforesaid restroom stall usage frequency determination unit 110 and determines the entrance/exit statuses of the restroom stalls 21, thereby determining the vacancy statuses. For example, it receives the detection signals through the terminal device 3 from sensors that detect the opening/closing of the doors 21b of the restroom stalls 21, sensors that detect whether keys of the doors 21b are locked or not, and so on, and based on the detection signals, determines whether the restroom stalls 21 are vacant or occupied.

Preferably, the vacancy status determination result by the vacancy status determination unit 150 is updated to the latest state every time the vacancy status changes, and the restroom stall usage frequency determination unit 110, the amenity usage status determination unit 120, and the recommended restroom stall extraction unit 130 execute the respective processes regarding restroom stalls 21 that are determined to be "vacant" by the vacancy status determination unit 150. Since the vacancy status determination unit 150 constantly detects the latest state, the result of the recommendation of the recommended restroom stall 21X is also updated every time it detects the latest state, so that users of the public restroom 2 can also be informed of the recommendation candidate out of the vacant restroom stalls 21.

Further, as illustrated in FIG. 9, when the vacancy status determination unit 150 detects that a user enters a certain restroom stall 21 and the final selection result information analysis unit 135 obtains this information, the final selection result information analysis unit 135 compares the information and the recommendation result of the recommended restroom stalls 21X displayed immediately before the user entered, and determines what is ground information for the user's final selection of the relevant restroom stall 21. For example, in the case where the user follows the evaluation result (weight) of the recommended restroom stall 21X, the final selection result information analysis unit 135 determines that this evaluation result is the ground information, and in the case where the user selects the restroom stall based on the aforesaid reference information appended by the second extraction unit 132, it determines that this reference information is the ground information, and outputs this as final selection result information. For example, in the case where the contents illustrated in FIG. 8(b) were displayed on the display 4 immediately before the user entered, it analyses whether the user selected the restroom stall 21A with the highest total weight, selected the restroom stall 21C in which the weight of the amenity 22 is the highest, or selected the restroom stall 21F in which the remaining quantity in a specific amenity 22 is large. Then, it feeds back the final selection result information to the second extraction unit 132 as described above.

Note that since the restroom stall usage frequency determination unit 110 detects that the restroom stalls 21 are used and finds their usage frequencies, it is also capable of determining whether the current states of the restroom stalls 21 are vacant or occupied. Therefore, the restroom usage status determination unit 110 may be configured to have the function as the vacancy status determination unit 150, and such a configuration is also included in this embodiment.

According to this embodiment, on the display 4 or the like being the notification destination of the notification unit 140, a user going to use the public restroom 2 can find the recommended restroom stall 21X that is determined in consideration of both a restroom stall 21 that is the recommendation candidate in view of the usage frequency and a restroom stall 21 that is the recommendation candidate in view of the usable quantity in the amenity 22. Therefore, the user can use a restroom stall 21 that is expected to be comfortable in view of the usage frequency and offers higher availability of the amenity 22, making it possible both to level the usage frequencies of the restroom stalls 21 and to offer a comfortable use of the restroom. This leads to the leveling of the dirtiness degrees of the restroom stalls 21, facilitating the maintenance, and also leads to the leveling of the maintenance of the amenities 22, which contributes to a maintenance cost reduction.

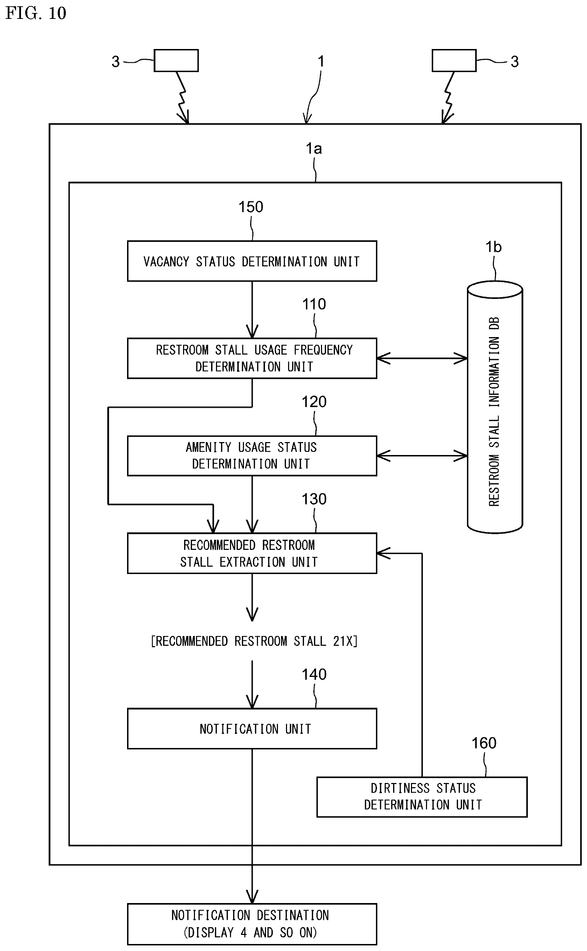

FIG. 10 is a conceptual diagram illustrating another embodiment of the present invention. In this embodiment, a computer program causes the execution of procedures functioning as a dirtiness status determination unit 160 in addition to the constituent elements of the above-described embodiment. The dirtiness status determination unit 160 has a function of receiving, through the terminal device 3, detection signals from sensors that are installed in the restroom stalls 21 to detect their dirtiness statuses, for example, wetting detection sensors installed on the floors around the toilet bowls, smell sensors installed at appropriate positions in the restroom stalls 21, and so on, and determining that a restroom stall 21 in which the amount of liquid dropping on the floor is over a predetermined threshold value set in advance or in which smell is over a predetermined threshold value has a high degree of dirtiness, to exclude this restroom stall from recommendation candidates. To put it the other way around, it has a function of extracting a restroom stall 21 in which the amount of dropping liquid or smell is equal to or less than the predetermined threshold value.

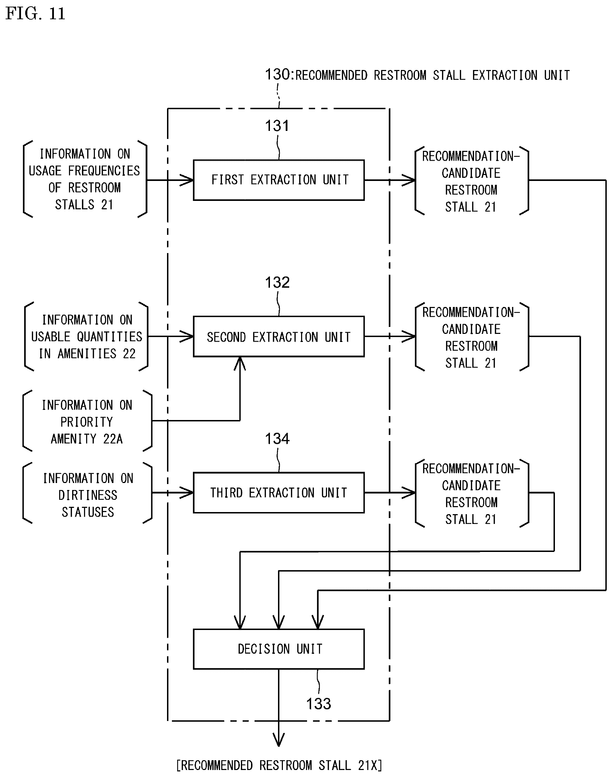

As illustrated in FIG. 11, the recommended restroom stall extraction unit 130 has a third extraction unit 134 that extracts, as a recommendation candidate, a restroom stall 21 whose dirtiness degree is determined to be equal to or less than the predetermined threshold value by the dirtiness status determination unit 160, and the decision unit 133 decides the recommended restroom stall 21X in consideration of the recommendation candidate extracted by the third extraction unit 134 in addition to the recommendation candidates extracted by the aforesaid first extraction unit 131 and second extraction unit 132.

A method that the decision unit 133 employs when taking the recommendation candidate extracted by the third extraction unit 134 into consideration can be, for example, a method to decide, as the recommended restroom stall 21X, a restroom stall 21 extracted by all of the first extraction unit 131, the second extraction unit 132, and the third extraction unit 134 out of the recommendation-candidate restroom stall 21 extracted by the first extraction unit 131, the recommendation-candidate restroom stall 21 extracted by the second extraction unit 132, and the recommendation-candidate restroom stall 21 extracted by the third extraction unit 134.

Further, as in the above-described embodiment, it is also possible to assign weights to the recommendation candidates extracted by the extraction units 131, 132, 134 and decide the recommended restroom stall 21X in descending order of the total weight (see FIG. 7). For example, a higher weight is assigned as the usage frequency is lower regarding the recommendation-candidate restroom stalls 21 extracted by the extraction unit 131, a higher weight is assigned as the number of usable amenities 22 is larger regarding the recommendation-candidate restroom stalls 21 extracted by the second extraction unit 132, a higher weight is assigned as the dirtiness status is lower regarding the recommendation-candidate restroom stalls 21 extracted by the third extraction unit 134, and the recommended restroom stall 21X is decided in descending order of the total weight of these three weights.

Further, similarly to the above, the decision unit 133 can select the plurality of recommended restroom stalls 21X in consideration of the recommendation candidates extracted by the third extraction unit 134, and further, the notification unit 140 can cause the display 4 or the like being the notification destination to display the plurality of recommended restroom stalls 21X together with their weights (evaluations) and the details of their amenities 22 (information on their kinds, remaining quantities, and so on) (see FIG. 8). Further, the dirtiness statuses of the recommended restroom stalls determined by the dirtiness status determination unit 160 can also be notified and caused to be displayed. As the dirtiness status, for example, an index indicating a wetting degree on the floor found from the detection signal of the wetting detection sensor, an index indicating a smelling degree found from the detection signal of the small sensor, and so on can be displayed for notification. Note that the index mentioned here includes various display forms such as a numerical value, a sign, a pattern, and a message.

According to this embodiment, for example, even the restroom stall 21A having a high total weight in the results of the extraction by the first extraction unit 131 and the second extraction unit 132 in the example of the previously described embodiment can have a lower total weight than the other restroom stalls 21 if the weight (evaluation) assigned to the result extracted by the third extraction unit 134 is combined. Further, displaying the indexes regarding the weights and the dirtiness statuses obtained by the extraction units 132, 132, 134 on the display 4 or the like involves a possibility that some user selects a restroom stall 21 whose weight (evaluation) assigned to the result extracted by the third extraction unit 134 is high, even if its total weight is relatively low, for instance.

Further, in this embodiment, even a restroom stall 21 whose usage frequency is determined to be low by the first extraction unit 131 may be determined to have a smelling degree exceeding the predetermined threshold value by the third extraction unit 134. Therefore, it is possible to determine cleanliness degrees of the restroom stalls 21 in consideration of an element other than the usage frequency. As a result, a user can use a restroom stall 21 more comfortably. Further, depending on the dirtiness status, immediate cleaning work is required, and a function of transmitting such a state to the manager side of the public restroom 2 can also be provided. Further, by accumulating the trends of the users' selection of restroom stalls 21 in the final selection result information analysis unit 135, it is also possible to find the kind of an amenity 22 that users consider important when using the restroom, out of the plurality of kinds of amenities 22. By using this information, the manager side of the public restroom 2 is capable of considering which one is desired to be installed or which one need not be installed, and further, a provider of the amenities 22 can easily recommend an amenity 22 of a type that meets the needs of the manager and users.

### Explanation of Reference Signs

1 restroom management device
1a storage unit
110 restroom stall usage frequency determination unit
120 amenity usage status determination unit
130 recommended restroom stall extraction unit
131 first extraction unit
132 second extraction unit
133 decision unit
134 third extraction unit
135 final selection result information analysis unit
140 notification unit
150 vacancy status determination unit
160 dirtiness status determination unit
2 public restroom
21 restroom stall
21A to 21F restroom stall
21X recommended restroom stall

## Claims

1. A restroom management device comprising:
a restroom stall usage frequency determination unit configured to determine usage frequencies of restroom stalls provided in a public restroom;
an amenity usage status determination unit configured to determine a usage status of one amenity or more provided in each of the restroom stalls;
a recommended restroom stall extraction unit configured to extract a restroom stall whose use is to be recommended, out of the restroom stalls; and
a notification unit configured to notify a user of the recommended restroom stall extracted by the recommended restroom stall extraction unit,
wherein the recommended restroom stall extraction unit includes:
a first extraction unit configured to extract one recommendation-candidate restroom stall or more based on the usage frequencies determined by the restroom stall usage frequency determination unit;
a second extraction unit configured to extract, as a recommendation candidate, one restroom stall or more in which a usable quantity in at least one amenity out of the one amenity or more is determined to be equal to a predetermined threshold value or more by the amenity usage status determination unit; and
a decision unit configured to decide the recommended restroom stall that the user is to be notified of, out of the recommendation-candidate restroom stalls extracted by the first extraction unit and the second extraction unit.

2. The restroom management device according to claim 1, wherein the second extraction unit extracts, as the recommendation candidate, a restroom stall in which a usable quantity in a priority amenity the determination on whose usable quantity is considered important, out of the one amenity or more, is determined to be equal to a predetermined threshold value or more by the amenity usage status determination unit.

3. The restroom management device according to claim 1, wherein the second extraction unit extracts, as the recommendation candidate, a restroom stall in which a usable quantity in every one of the one amenity or more is determined to be equal to a predetermined threshold value or more by the amenity usage status determination unit.

4. The restroom management device according to claim 1, wherein the predetermined threshold value used in the amenity usage status determination unit is set based on a maximum usable quantity in each of the amenities, a maintenance cycle of each of the amenities, and the usage frequency of each of the restroom stalls which frequency is obtained from the restroom stall usage frequency determination unit.

5. The restroom management device according to claim 1, wherein the first extraction unit extracts the recommendation candidate in ascending order of the usage frequencies determined by the restroom stall usage frequency determination unit.

6. The restroom management device according to claim 1, wherein the decision unit decides, as the recommended restroom stall, a restroom stall extracted by both the first and second extraction units, out of the recommendation-candidate restroom stalls extracted by the first extraction unit and the recommendation-candidate restroom stall extracted by the second extraction unit.

7. The restroom management device according to any one of claims 1 to 5,
wherein the decision unit
performs weighing regarding the recommendation-candidate restroom stall extracted by the first extraction unit, with a larger weight being assigned as the usage frequency is lower,
performs weighing regarding the recommendation-candidate restroom stall extracted by the second extraction unit, with a larger weight being assigned as the number of usable amenities is larger, and
decides the recommended restroom stall in descending order of a total weight of the two weights.

8. The restroom management device according to claim 1, wherein the notification unit notifies one or more of the recommended restroom stalls extracted by the recommended restroom stall extraction unit.

9. The restroom management device according to claim 8,
wherein the notification unit notifies, together with the recommended restroom stall:
the usage frequency, of the recommended restroom stall, determined by the restroom stall usage frequency determination unit; and
details of the amenity usable in the recommended restroom stall which details are determined by the amenity usage status determination unit.

10. The restroom management device according to claim 1, further comprising
a dirtiness status determination unit configured to determine dirtiness statuses of the restroom stalls,
wherein the recommended restroom stall extraction unit includes a third extraction unit configured to extract, as a recommendation candidate, a restroom stall whose dirtiness status is determined to be equal to a predetermined threshold value or less by the dirtiness status determination unit.

11. The restroom management device according to claim 10, wherein the decision unit decides, as the recommended restroom stall, a restroom stall extracted by all the first to third extraction units, out of the recommendation candidate extracted by the first extraction unit, the recommendation-candidate restroom stall extracted by the second extraction unit, and the recommendation-candidate restroom stall extracted by the third extraction unit.

12. The restroom management device according to claim 11,
wherein the decision unit
performs weighing regarding the recommendation-candidate restroom stall extracted by the first extraction unit, with a larger weight being assigned as the usage frequency is lower,
performs weighing regarding the recommendation-candidate restroom stall extracted by the second extraction unit, with a larger weight being assigned as the number of usable amenities is larger,
performs weighing regarding the recommendation-candidate restroom stall extracted by the third extraction unit, with a larger weight being assigned as the dirtiness status is lower, and
decides the recommended restroom stall in descending order of a total weight of the three weights.

13. The restroom management device according to claim 10,
wherein the notification unit notifies, together with the recommended restroom stall:
the usage frequency, of the recommended restroom stall, determined by the restroom stall usage frequency determination unit;
details of the amenity usable in the recommended restroom stall which details are determined by the amenity usage status determination unit; and
the dirtiness status, of the recommended restroom stall, determined by the dirtiness status determination unit.

14. The restroom management device according to claim 1, further comprising
a vacancy status determination unit configured to determine vacancy statuses of the restroom stalls by determining entrance and exit statuses based on signals from sensors that detect entrance to the restroom stalls,
wherein the recommended restroom stall extraction unit decides the recommended restroom stall out of restroom stalls that are determined to be "vacant" by the vacancy status determination unit.

15. The restroom management device according to claim 14, comprising
a final selection result information analysis unit configured to obtain information on a restroom stall selected by the user which information is obtained from the vacancy status determination unit, compare the information with a recommendation result of the recommended restroom stall displayed immediately before the user enters the restroom stall, determine ground information based on which the user finally selects the restroom stall, and output the ground information as final selection result information.

16. The restroom management device according to claim 15,
wherein the second extraction unit has a function of extracting, as the recommendation candidate, a restroom stall in which a usable quantity in a priority amenity the determination on whose usable quantity is considered important, out of the one amenity or more, is determined to be equal to a predetermined threshold value or more by the amenity usage status determination unit, and
wherein the final selection result information analysis unit feeds back the final selection result information to the second extraction unit, and the second extraction unit identifies the priority amenity based on the final selection result information.

17. A computer program causing a computer to function as a restroom management device, the computer program causing the computer to execute:
a procedure for determining usage frequencies of restroom stalls provided in a public restroom;
a procedure for determining a usage status of one amenity or more provided in each of the restroom stalls;
a procedure for extracting a restroom stall whose use is to be recommended, out of the restroom stalls; and
a procedure for notifying a user of the extracted recommended restroom stall,
wherein, in the procedure for extracting the recommended restroom stall, the computer program causes the computer to execute:
a procedure for extracting one recommendation-candidate restroom stall or more determined based on the usage frequencies;
a procedure for extracting, as a recommendation candidate, one restroom stall or more in which a usable quantity in at least one amenity out of the one amenity or more is determined to be equal to a predetermined threshold value or more; and
a procedure for deciding the recommended restroom stall that the user is to be notified of, out of the recommendation-candidate restroom stall extracted based on the usage frequencies and the recommendation-candidate restroom stall extracted based on the usable quantities in the amenities.

18. The computer program according to claim 17, further causing execution of a procedure for determining dirtiness statuses of the restroom stalls,
wherein, in the procedure for extracting the recommended restroom stall, a procedure for extracting, as a recommendation candidate, a restroom stall whose dirtiness status is determined to be equal to a predetermined threshold value or less is caused to be executed.
